# EUROPEAN PATENT SPECIFICATION

(11) **EP 1 443 679 B1**
(45) Date of publication and mention of the grant of the patent: **09.05.2007**
(21) Application number: 04007965.9
(22) Date of filing: 21.03.2000
(51) Int. Cl.: H04K 1/00, H04B 7/005, H04Q 7/38

(54) **Method and base station for transmitting information on a common packet data channel**
Verfahren und Feststation zur Informationsübertragung über einen gemeinsamen Paketdatenkanal
Procédé et station de base pour la transmission d'informations sur un canal commun de paquets

(30) Priority: 22.03.1999 US 273508; 24.03.1999 US 275010; 04.05.1999 US 304345
(43) Date of publication of application: 04.08.2004
(62) Divisional of application: 00940005.2
(73) Proprietor: Golden Bridge Technology, Inc., Long Branch, NJ 07740 (US)
(72) Inventor: Kanterakis, Emmanuel, North Brunswick, NJ 08902 (US); Parsa, Kourosh, Riverside, CT 06878 (US)
(74) Representative: Rupprecht, Kay

(56) References cited:
- EP-A- 0 773 636
- WO-A-93/18601
- US-A- 5 841 768

## Description

### BACKGROUND OF THE INVENTION

This invention relates to spread-spectrum communications, and more particularly to code-division-multiple-access (CDMA) cellular, packet-switched systems.

### DESCRIPTION OF THE RELEVANT ART

Presently proposed for a standard is a random-access burst structure which has a preamble followed by a data portion. The preamble has 16 symbols, the preamble sequence, spread by an orthogonal Gold code. A remote station acquires chip and frame synchronization, but no consideration is given to closed-loop power control or collision detection.

The Document US-A-5 841 768 describes a method and a system of transferring data for one a plurality of wireless remote station (RS) handsets through a base station (BS) of a wireless telecommunication network, the base station a BS-spread-spectrum transmitter and a BS-spread-spectrum receiver, the method comprising the steps of:
- transmitting a frame-timing signal from said BS-spread-spectrum transmitter over a broadcast common-synchronization channel having a common chip-sequence signal;
- receiving the broadcast common-synchronization channel comprising a frame timing signal at an RS-spread-spectrum receiver of the one RS;
- determining frame time at an RS-spread-spectrum receiver of the one RS from the received frame-timing signal;
- transmitting an access-burst signal from an RS-spread-spectrum transmitter of the one RS handset, the access-burst signal comprising access codes or short codes transmitting them at sequentially increasing power levels;
- receiving at least one code of the access-burst signal at said BS spread-spectrum receiver at a detected power level;
- transmitting an acknowledgment from said BS-spread-spectrum transmitter, in response to the receipt, of the code of the access-burst signal; receiving the acknowledgement at said RS-spread-spectrum receiver;
- receiving the acknowledgement at said RS-spread-spectrum receiver and ceasing transmission of the access burst signal in response thereto; and
- transmitting a spread spectrum signal comprising any of data and power control information form said RS-spread-spectrum transmitter, in response of the receipt of the acknowledgement.

### SUMMARY OF THE INVENTION

A general object of the invention is an efficient method for packet data transfer on CDMA systems.

Another object of the invention is high data throughput and low delay, and efficient power control.

These objects are solved by a method according to claim 1, a base station according to claim 6, and a processing device according to claim 11.

### BRIEF DESCRIPTION OF THE DRAWINGS

The accompanying drawings, which are incorporated in and constitute a part of the specification, illustrate preferred embodiments of the invention, and together with the description serve to explain the principles of the invention.
FIG. 1 is a common packet channel system block diagram with a common control downlink channel;
FIG. 2 is common packet channel system block diagram with a dedicated downlink channel;
FIG. 3 is a block diagram of a base station receiver and transmitter for common packet channel;
FIG. 4 is a block diagram of a remote station receiver and transmitter for common packet channel;
FIG. 5 is a timing diagram for access burst transmission;
FIG. 6 illustrates common packet channel access burst of FIG. 5 using a common control downlink channel;

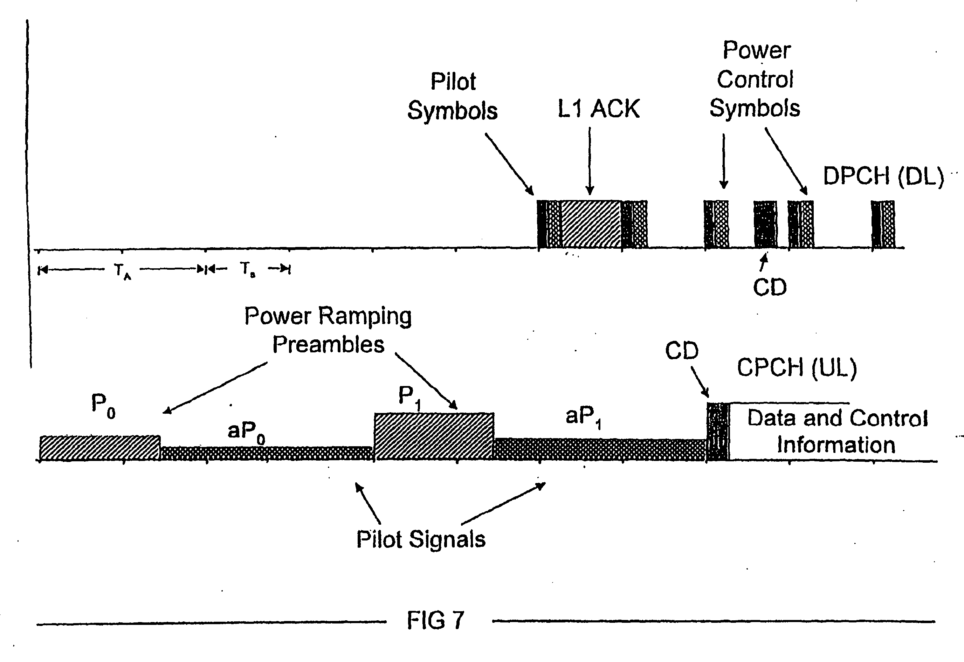

FIG. 7 illustrates common packet channel access of FIG. 5 using a dedicated downlink channel
FIG. 8 shows the structure of the preamble;
FIG. 9 illustrates preamble and pilot formats;
FIG. 10 is a common packet channel timing diagram and frame format of the down link common control link;
FIG. 11 illustrates frame format of common packet channel, packet data; and
FIG. 12 illustrates a common-packet channel timing diagram for mutual pre-data transmission power control.
FIG. 13 illustrates a common packet channel timing diagram with associated downlink dedicated physical channel;
FIG. 14 illustrates a common packet channel timing diagram with associated downlink physical channel;
FIG. 15 illustrates a common packet channel timing diagram with associated downlink physical channel; and
FIG. 16 illustrates a common packet channel timing diagram with associated downlink dedicated physical channel, with a common preamble for two or more base stations.

### DETAILED DESCRIPTION OF THE PREFERRED EMBODIMENTS

Reference now is made in detail to the present preferred embodiments of the invention, examples of which are illustrated in the accompanying drawings, wherein like reference numerals indicate like elements throughout the several views.

The common-packet channel is a new and novel uplink transport channel for transmitting variable size packets from a remote station to a base station within listening range, without the need to obtain a two way link with any one or set of base stations. The channel resource allocation is contention based; that is, a number of remote stations could at any time content for the same resources, as found in an ALOHA system.

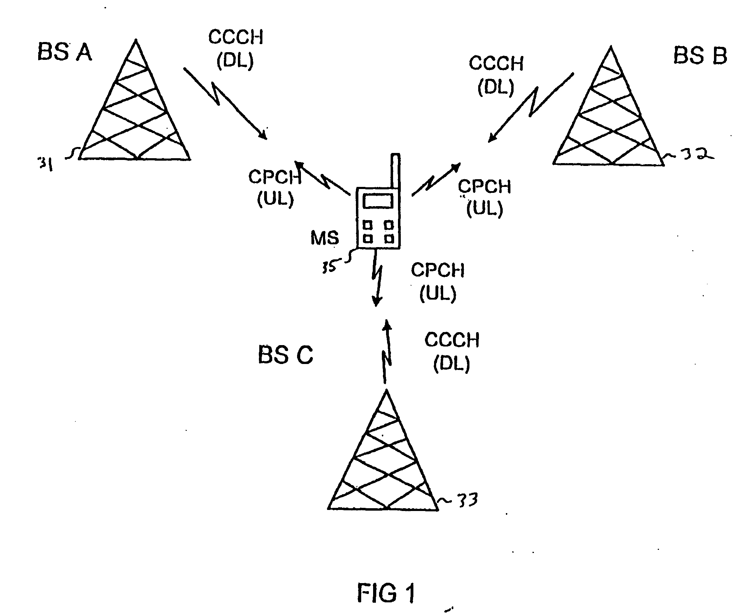

In the exemplary arrangement shown in FIG. 1, common-packet channel provides an improvement to a code-division-multiple-access (CDMA) system employing spread-spectrum modulation. The CDMA system has a plurality of base stations (BS) 31, 32, 33 and a plurality of remote stations (RS). Each remote station 35 has an RS-spread-spectrum transmitter and an RS-spread-spectrum receiver. An uplink is from the remote station 35 to a base station 31. The uplink has the common-packet channel (CPCH). A downlink is from a base station 31 to the remote station 35, and is denoted a common-control channel (CCCH). The common-control channel has common signaling used by the plurality of remote stations.

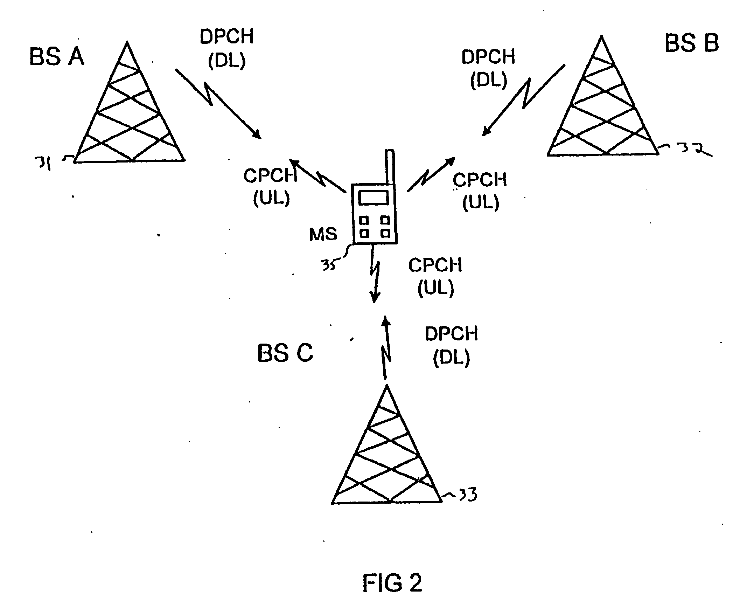

An alternative to the common-control channel, but still using the common-packet channel, is the downlink dedicated physical channel (DPCH), shown in FIG. 2. The dedicated downlink channel has signaling that is used for controlling a single remote station.

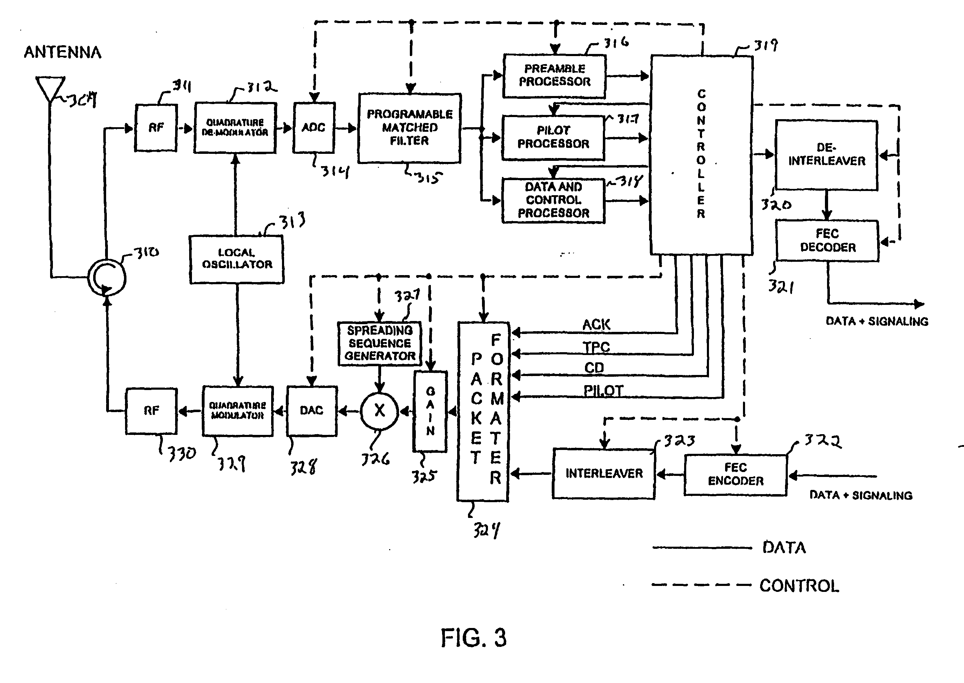

As illustratively shown in FIG. 3, a BS spread-spectrum transmitter and a BS spread-spectrum receiver is shown. The BS spread-spectrum transmitter and the BS spread-spectrum receiver are located at the base station 31. The BS spread-spectrum receiver includes an antenna 309 coupled to a circulator 310, a receiver radio frequency (RF) section 311, a local oscillator 313, a quadrature demodulator 312, and an analog-to-digital converter 314. The receiver RF section 311 is coupled between the circulator 310 and the quadrature demodulator 312. The quadrature demodulator is coupled to the local oscillator 313 and to the analog to digital converter 314. The output of the analog-to-digital converter 315 is coupled to a programmable-matched filter 315.

A preamble processor 316, pilot processor 317 and data-and-control processor 318 are coupled to the programmable-matched filter 315. A controller 319 is coupled to the preamble processor 316, pilot processor 317 and data-and-control processor 318. A de-interleaver 320 is coupled between the controller 319 and a forward-error-correction (FEC) decoder 321.

The BS spread-spectrum transmitter includes a forward-error-correction (FEC) encoder 322 coupled to an interleaver 323. A packet formatter 324 is coupled to the interleaver 323 and to the controller 319. A variable gain device 325 is coupled between the packet formatter 324 and a product device 326. A spreading-sequence generator 327 is coupled to the product device 326. A digital-to-analog converter 328 is coupled between the product device 328 and quadrature modulator 329. The quadrature modulator 329 is coupled to the local oscillator 313 and a transmitter RF section 330. The transmitter RF section 330 is coupled to the circulator 310.

The controller 319 has control links coupled to the analog-to-digital converter 314, programmable-matched filter 315, preamble processor 316, the digital-to-analog converter 328, the spreading sequence generator 327, the variable gain device 325, the packet formatter 324, the de-interleaver 320, the FEC decoder 321, the interleaver 323 and the FEC encoder 322.

A received spread-spectrum signal from antenna 309 passes through circulator 310 and is amplified and filtered by receiver RF section 311. The local oscillator 313 generates a local signal which quadrature demodulator 312 uses to demodulator in-phase and quadrature phase components of the received spread-spectrum signal. The analog-to-digital converter 314 converts the in-phase component and the quadrature-phase component to a digital signal. These functions are well known in the art, and variations to this block diagram can accomplish the same function.

The programmable-matched filter 315 despreads the received spread-spectrum signal. A correlator, as an alternative, may be used as an equivalent means for despeading the received spread-spectrum signal.

The preamble processor 316 detects the preamble portion of the received spread-spectrum signal. The pilot processor detects and synchronizes to the pilot portion of the received spread-spectrum signal. The data and control processor detects and processes the data portion of the received spread-spectrum signal. Detected data passes through the controller 319 to the de-interleaver 320 and FEC decoder 321. Data and signaling are outputted from the FEC decoder 321.

In the BS transmitter, data are FEC encoded by FEC encoder 322, and interleaved by interleaver 323. The packet formatter formats data, signaling, acknowledgment signal, collision detection signal, pilot signal and transmitting power control (TPC) signal into a packet. The packet is outputted from packet formatter, and the packet level is amplified or attenuated by variable gain device 325. The packet is spread-spectrum processed by product device 326, with a spreading chip-sequence from spreading-sequence generator 327. The packet is converted to an analog signal by digital-to-analog converter 328, and in-phase and quadrature-phase components are generated by quadrature modulator 329 using a signal from local oscillator 313. The packet is translated to a carrier frequency, filtered and amplified by transmitter RF section 330, and then passes through circulator 310 and is radiated by antenna 309.

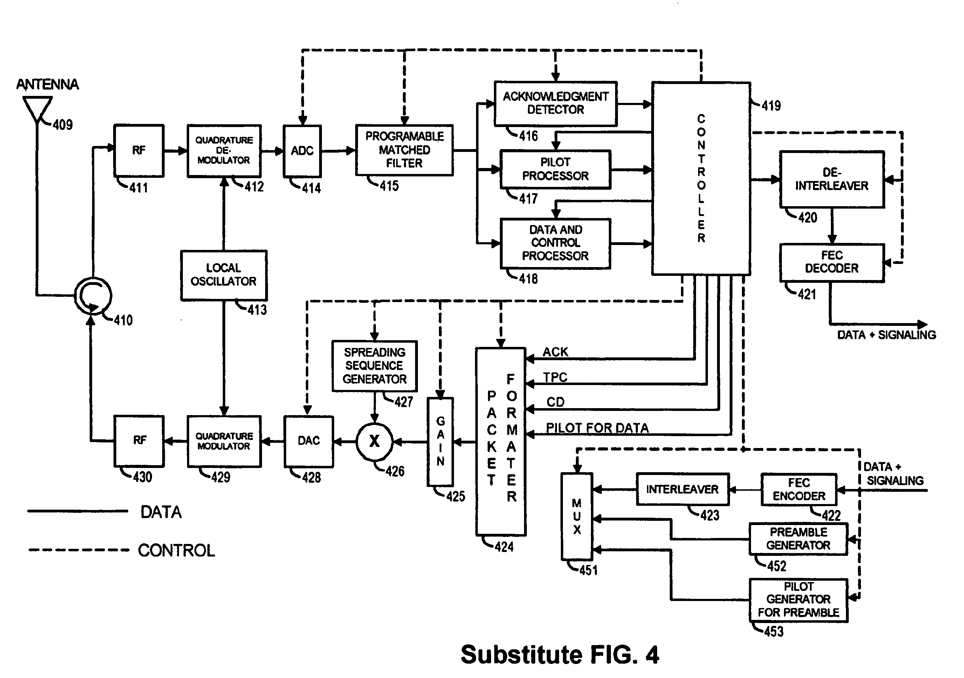

In the illustrative embodiment shown in FIG. 4, a RS spread-spectrum transmitter and a RS spread-spectrum receiver are shown. The RS spread-spectrum transmitter and the RS spread-spectrum receiver are located at the remote station 35, shown in FIG 1. The RS spread-spectrum receiver includes an antenna 409 coupled to a circulator 410, a receiver radio frequency (RF) section 411, a local oscillator 413, a quadrature demodulator 412, and an analog-to-digital converter 414. The receiver RF section 411 is coupled between the circulator 410 and the quadrature demodulator 412. The quadrature demodulator is coupled to the local oscillator 413 and to the analog to digital converter 414. The output of the analog-to-digital converter 415 is coupled to a programmable-matched filter 415.

An acknowledgment detector 416, pilot processor 417 and data-and-control processor 418 are coupled to the programmable-matched filter 415. A controller 419 is coupled to the acknowledgment detector 416, pilot processor 417 and data-and-control processor 418. A de-interleaver 420 is coupled between the controller 419 and a forward-error-correction (FEC) decoder 421.

The RS spread-spectrum transmitter includes a forward-error-correction (FEC) encoder 422 coupled to an interleaver 423. A packet formatter 424 is coupled through a multiplexer 451 to the interleaver 423 and to the controller 419. A preamble generator 452 and a pilot generator 453 for the preamble are coupled to the multiplexer 451. A variable gain device 425 is coupled between the packet formatter 424 and a product device 426. A spreading-sequence generator 427 is coupled to the product device 426. A digital-to-analog converter 428 is coupled between the product device 428 and quadrature modulator 429. The quadrature modulator 429 is coupled to the local oscillator 413 and a transmitter RF section 430. The transmitter RF section 430 is coupled to the circulator 410.

The controller 419 has control links coupled to the analog-to-digital converter 414, programmable-matched filter 415, acknowledgment detector 416, the digital-to-analog converter 428, the spreading sequence generator 427, the variable gain device 425, the packet formatter 424, the de-interleaver 420, the FEC decoder 421, the interleaver 423, the FEC encoder 422, the preamble generator 452 and the pilot generator 453.

A received spread-spectrum signal from antenna 409 passes through circulator 410 and is amplified and filtered by receiver RF section 411. The local oscillator 413 generates a local signal which quadrature demodulator 412 uses to demodulate in-phase and quadrature phase components of the received spread-spectrum signal. The analog-to-digital converter 414 converts the in-phase component and the quadrature-phase component to a digital signal. These functions are well known in the art, and variations to this block diagram can accomplish the same function.

The programmable-matched filter 415 despreads the received spread-spectrum signal. A correlator, as an alternative, may be used as an equivalent means for despeading the received spread-spectrum signal.

The acknowledgment detector 416 detects the an acknowledgment in the received spread-spectrum signal. The pilot processor detects and synchronizes to the pilot portion of the received spread-spectrum signal. The data and control processor detects and processes the data portion of the received spread-spectrum signal. Detected data passes through the controller 419 to the de-interleaver 420 and FEC decoder 421. Data and signaling are outputted from the FEC decoder 421.

In the RS transmitter, data are FEC encoded by FEC encoder 422, and interleaved by interleaver 423. The preamble generator 452 generates a preamble and the pilot generator 453 generates a pilot for the preamble. The multiplexer 451 multiplexes the data, preamble and pilot, and the packet formatter 424 formats the preamble, pilot and data into a common-packet channel packet. Further, the packet formatter formats data, signaling, acknowledgment signal, collision detection signal, pilot signal and TPC signal into a packet. The packet is outputted from packet formatter, and the packet level is amplified or attenuated by variable gain device 425. The packet is spread-spectrum processed by product device 426, with s spreading chip-sequence from spreading-sequence generator 427. The packet is converted to an analog signal by digital-to-analog converter 428, and in-phase and quadrature-phase components are generated by quadrature modulator 429 using a signal from local oscillator 413.

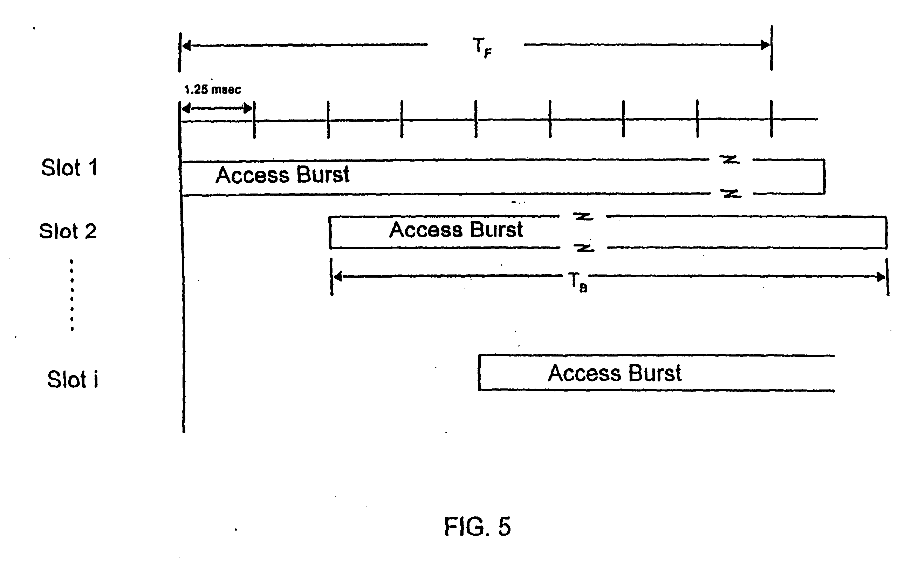

Referring to FIG. 5, the base station transmits a common-synchronization channel, which has a frame time duration TF. The common-synchronization channel has a common chip-sequence signal, which is common to the plurality of remote stations communicating with the particular base station. In a particular embodiment, the time TF of one frame is ten milliseconds. Within one frame, there are eight access slots. Each access slot lasts 1.25 milliseconds. Timing for the access slots is the frame timing, and the portion of the common-synchronization channel with the frame timing is denoted the frame-timing signal. The frame-timing signal is the timing a remote station uses in selecting an access slot in which to transmit an access-burst signal.

A first remote station attempting to access the base station, has a first RS-spread-spectrum receiver for receiving the common synchronization channel, broadcast from the base station. The first RS-spread-spectrum receiver determines frame timing from the frame-timing signal.

A first RS-spread-spectrum transmitter, located at the first remote station, transmits an access-burst signal. An access burst signal, as shown in FIG. 5, starts at the beginning of an access slot, as defined by the frame timing portion of the common-synchronization channel.

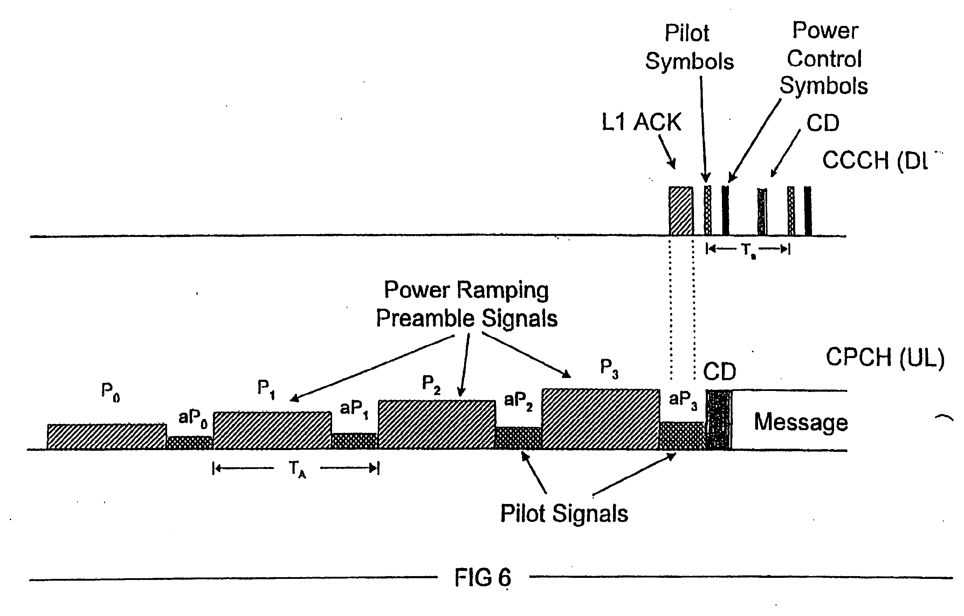

FIG. 6 illustratively shows the common-packet channel access burst format, for each access-burst signal. Each access-burst signal has a plurality of segments. Each segment has a preamble followed by a pilot signal. The plurality of segments has a plurality of power levels, respectively. More particularly, the power level of each segment increases with each subsequent segment. Thus, a first segment has a first preamble and pilot, at a first power level P₀. A second segment has a second preamble and a second pilot, at a second power level P₁. The third segment has a third preamble and a third pilot at a third power level P₂. The first preamble, the second preamble, the third preamble, and subsequent preambles, may be identical or different. The power level of the pilot preferably is less than the power level of the preamble. A preamble is for synchronization, and a corresponding pilot, which follows a preamble, is to keep the BS spread-spectrum receiver receiving the spread-spectrum signal from the remote station, once a preamble is detected.

A subsequent increase or decrease of power levels is basically a closed loop power control system. Once a BS spread-spectrum receiver detects a preamble from the remote station, the BS spread-spectrum transmitter sends an acknowledgment (ACK) signal.

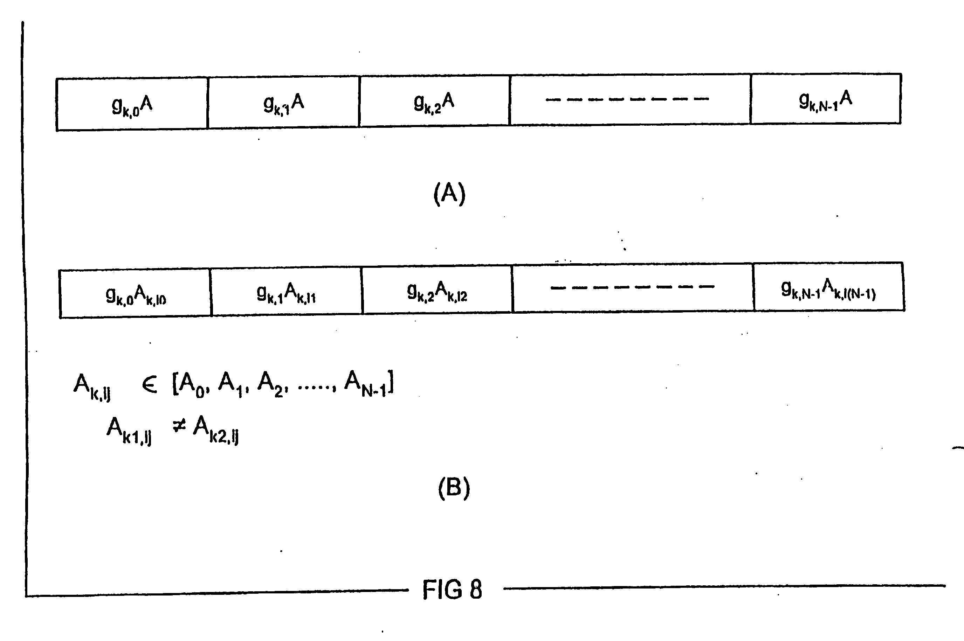

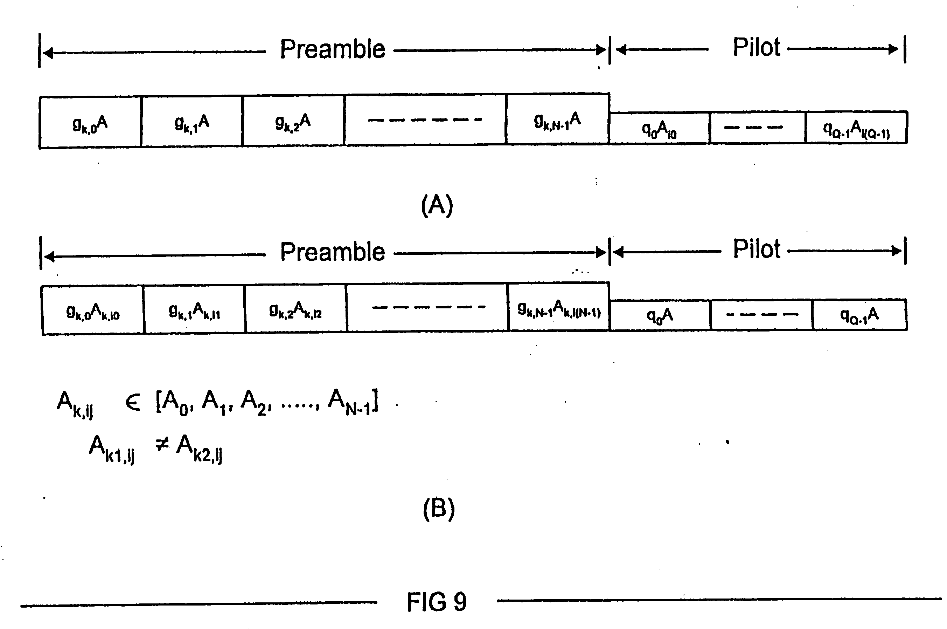

Referring to FIG. 4, the preamble is generated by preamble generator 452 and the pilot is generated by pilot generator 453. A preamble format is shown in FIG. 8. The preamble format with a pilot is shown in FIG. 9. The multiplexer 451, with timing from the controller 419, selects the preamble then a corresponding pilot, for packet formatter 424. A series of preambles and pilots may be generated and made as part of the packet by packet formatter 424. The preambles and pilots can have their power level adjusted either in the preamble generator 452 and pilot generator 453, or by the variable gain device 425.

The BS spread-spectrum receiver receives the access-burst signal at a detected-power level. More particularly, the access-burst signal has the plurality of preambles at a plurality of power levels, respectively. When a preamble with sufficient power level is detected at the BS spread-spectrum receiver, then an acknowledgment (ACK) signal is transmitted from the BS spread-spectrum transmitter. The ACK signal is shown in FIG. 6, in response to the fourth preamble having sufficient power for detection by the BS spread-spectrum receiver.

FIG. 3 shows the preamble processor 316 for detecting the preamble and the pilot processor 317 for continuing to receive the packet after detecting the preamble. Upon detecting the preamble, the processor 319 initiates an ACK signal which passes to packet formatter 324 and is radiated by the BS spread-spectrum transmitter.

The first RS-spread-spectrum receiver receives the acknowledgment signal. Upon receiving the ACK signal, the first RS-spread-spectrum transmitter transmits to the BS-spread-spectrum receiver, a spread-spectrum signal having data. The data is shown in FIG. 6, in time, after the ACK signal. The data includes a collision detection (CD) portion of the signal, referred to herein as a collision detection signal, and message.

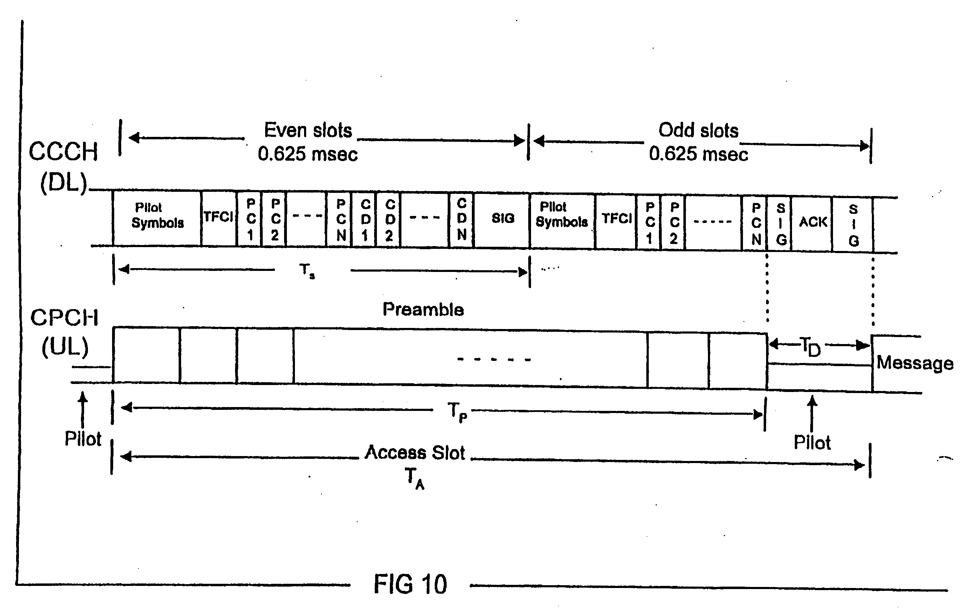

In response to each packet transmitted from the RS spread-spectrum transmitter, the BS receiver detects the collision detection portion of the data, and retransmits the data field of the collision detection portion of the data to the remote station. Fig. 10 shows the timing diagram for re-transmitting the collision detection field. There are several slots for collision detection retransmission, which can be used for re-transmitting the collision detection field for several remote stations. If the collision detection field were correctly re-transmitted to the remote station, then the remote station knows its packet is successfully received by the base station. If the collision detection field were not correctly re-transmitted by the base station, then the remote station assumes there is a collision with a packet transmitted by another remote station, and stops further transmission of the data.

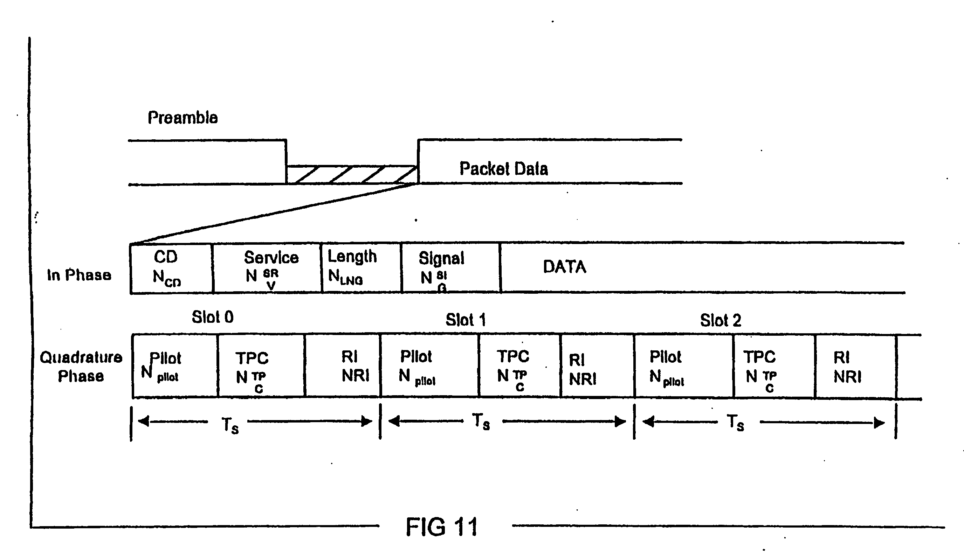

FIG. 11 shows a frame format of a common-packet channel data payload.

In operation, an overview of the way this transport mechanism is used is as follows. A remote station (RS) upon power up searches for transmission from nearby base stations. Upon successful synchronization with one or more base stations, the Remote station receives the necessary system parameters from a continuously transmitted by all base stations broadcast control channel (BCCH). Using the information transmitted from the BCCH, the remote station can determine various parameters required when first transmitting to a base station. Parameters of interest are the loading of all the base station in the vicinity of the remote station, their antenna characteristics, spreading codes used to spread the downlink transmitted information, timing information and other control information. With this information, the remote station can transmit specific waveforms in order to capture the attention of a nearby base station. In the common packet channel the remote station, having all the necessary information from the nearby base station, it starts transmitting a particular preamble from a set of predefined preambles, at a well selected time intervals. The particular structure of the preamble waveforms is selected on the basis that detection of the preamble waveform at the base station is to be as easy as possible with minimal loss in detectability.

The physical common packet channel (CPCH) is used to carry the CPCH. It is based on the well-known Slotted ALOHA approach. There is a number of well-defined time offsets relative to the frame boundary of a downlink received BCCH channel. These time offsets define access slots. The number of access slots is chosen according to the particular application at hand. As an example, shown in Fig. 5, eight access slots are spaced 1.25 msec apart in a frame of 10-msec duration.

According to FIG. 5, a remote station picks an access slot in a random fashion and tries to obtain a connection with a base station by transmitting a preamble waveform. The base station is able to recognize this preamble, and is expecting its reception at the beginning of each access slot. The length of the access burst is variable and the length of the access burst is allowed to vary from a few access slots to many frame durations. The amount of data transmitted by the remote station could depend on various factors. Some of those are: class capability of the remote station, prioritization, the control information transmitted down by the base station, and various bandwidth management protocols residing and executed at the base station. A field at the beginning of the data portion signifies the length of the data.

The structure of the access burst is shown in FIG. 6. The access burst starts with a set of preambles of duration Tp whose power is increased in time from preamble to preamble in a stepwise manner. The transmitted power during each preamble is constant. For the duration T_{D} between preambles the access burst consists of a pilot signal transmitted at a fixed power level ratio relative to the previously transmitted preamble. There is a one to one correspondence between the code structure of the preamble and the pilot signal. The pilot signal could be eliminated by setting it to a zero power level.

The transmission of the preambles ceases because either the preamble has been picked up, detected, by the base station, and the base station has responded to the remote station with a layer one acknowledgment L1 ACK which the remote station has also successfully received. Transmission of the preamble ceases also if the remote station has transmitted the maximum allowed number of preambles Mₚ. Upon receiving this L1 ACK the remote station starts transmission of its data. Once the remote station has transmitted more than Mₚ preambles, it undergoes a forced random back off procedure. This procedure forces the remote station to delay its access burst transmission for a later time. The random back off procedure could be parameterized based on the priority statues of the Remote station. The amount by which the power is increased from preamble to preamble is Dₚ which is either fixed for all cells at all times or it is repeatedly broadcast via the BCCH. Remote stations with different priorities status could use a power increase which depends on a priority status assigned to the remote station. The priority status could be either predetermined or assigned to the remote station after negotiation with the base station.

### The Preamble Signal Structure

There is a large set of possible preamble waveforms. Every base station is assigned a subset of preambles from the set of all preamble waveforms in the system. The set of preambles a base station is using is broadcast through it's BCCH channel. There are many ways of generating preamble waveforms. One existing way is to use a single orthogonal Gold code per preamble from the set of all possible orthogonal Gold codes of length L. A preamble could then be constructed by repeating the Gold code a number of times N to transmit a length N complex sequence. For example if A denotes the orthogonal Gold code and Gᵢ = {gᵢ,₀ g_{i,1} g_{i,2} ... g_{i,N-1}}, a length N complex sequence, then a preamble could be formed as shown in Fig. 8, where, g_{i,j}, j=0, ... ,N-1, multiplies every element in A. Normally the sets of Gᵢ's are chosen to be orthogonal to each other. This will allow for a maximum of N possible waveforms. The total number of possible preambles is then L*N.

The preferred approach is to use different codes rather than a single repeating code in generating each preamble. In that case, if L possible codes, not necessarily Gold Codes, were possible, designated by A₀, A₁,...,A_{L-1}, then possible preambles will be as shown in Fig. 8. The order of the Aᵢ's can be chosen so that identical codes are not used in the same locations for two different preambles. A similar approach could be used to form the pilot signals.

### The Downlink Common Control Channel

In Fig 10, the downlink common control channel structure for even and odd slots is shown. The even slots contain reference data and control data. The pilot symbols are used to derive a reference for demodulating the remaining control symbols. The control symbols are made of transport frame indicator (TFI) symbols, power control (PC) symbols, collision detection (CD) symbol and signaling symbols (SIG). The odd slots contain all the information that the even slots contain plus an acknowledgment (ACK) signal. Odd slots do not include collision detection fields.

The uplink CPCH is shown over the last transmitted preamble. After the last transmitted preamble, the base station has successfully detected the transmission of the last transmitted preamble and transmits back the acknowledgment signal. During the same time, the remote station is tuned to receive the ACK signal. The ACK signal transmitted corresponds to the specific preamble structure transmitted on the uplink. Once the remote station detects the ACK signal corresponding to transmitted preamble by the remote station, the remote station begins transmission of its data.

Corresponding with the preamble structure in the uplink there is a corresponding in time power control information symbol and a corresponding in time collision detection field. Upon start of data transmission the remote station uses the downlink transmitted power control information to adjust its transmitted power. The power control symbols are decoded to derive a binary decision data, which is then used to increase or decrease the transmitted power accordingly. Figure 11 shows the structure of the uplink frame and the slot format for the data portion of the uplink transmission. Data and control information is transmitted in an in-phase and quadrature-phase multiplexed format. That is, the data portion could be transmitted on the in-phase coordinate and the control portion on the quadrature-phase coordinate. The modulation for the data and control is BPSK. The control channel contains the information for the receiver to enable the demodulation of the data. The control channel provides for upper layer system functionality. The data portion consists of one or more frames. Each frame consists of a number of slots. As an example the frame duration could be 10 milliseconds long and the slot duration 0.625 milliseconds long. In that case, there are 16 slots per frame. The beginning of the data payload contains a collision detection field used to relay information about the possibility of collision with other simultaneously transmitting remote stations. The collision detection field is read by the base station. The base station expects the presence of the collision detection field since it had provided an ACK signal at the last time slot.

The collision detection field includes a temporary identification (ID) number chosen at random by the remote for the transmission of the current packet. The base station reads the collision detection field and reflects, or transmits back, the collision detection field on the downlink. If the collision detection field detected by the remote station matched the one just being transmitted by the same remote station, then the collision detection field is an identification that the transmission is being received correctly. The remote station then continues transmitting the remaining of the packet. In case the collision detection field has not been received correctly by the remote station, then the remote station considers the packet reception by the base station as erroneous and discontinues transmission of the remaining packet.

The function of the remaining fields are as follows. The Pilot field enables the demodulation of both the data and control bits. The transmitted power control (TPC) bits are used to control the power of a corresponding downlink channel, in case a down link channel directed to the same user is operational. If the downlink channel were not operational, then the TPC control bits can be used to relay additional pilot bits instead.

The Rate Information (RI) field is used to provide the transmitter with the ability to change its data rate without the necessity to explicitly negotiate the instantaneous data rate with the base station. The service field provides information of the particular service the data bits are to be used for. The length field specifies the time duration of the packet. The signal field can be used to provide additional control information as required.

Additional functionalities of the common packet channel are: (1) bandwidth management and (2) L2 acknowledgment mechanism.

The bandwidth management functionality is implemented via signaling information on the down link common control channel. There are three ways for incorporating this functionality. The first relies on changing the priority status of all uplink users, which currently are transmitting information using the CPCH. By this method all the users are remapping their priority status via a control signal sent at the downlink. When the priority of the CPCH users is lowered their ability to capture an uplink channel is lowered. Thus the amount of data sent on the uplink by the CPCH users is thus reduced. The other mechanism is for the base station to relay the maximum possible data rate the CPCH users are allowed to transmit. This prevents the CPCH users from transmitting at a rate which could possibly exceed the uplink system capacity and therefore take the cell down, i.e., disrupt the communication for all users currently connected to the base station. For the third method, the base' station could provide a negative acknowledgment through the ACK signal. In this case, any remote station which is tuned to receive the ACK signal is prohibited from further transmission of an access-burst signal.

The L2 acknowledgment (L2 ACK) mechanism, which is different than the L1 ACK, is used by the base station to notify the remote station for the correctness of an uplink packet reception. The base station could either relay to the remote station which portions of the packet have being received correctly or which have being received incorrectly. There are many existing ways of implementing a particular protocol to relay this type of information. For example, the packet could be identified as consisting of a number of frames, with each frame consisting of a number of sub-frames. The frames are identified by a predetermined number. The sub-frames in each frame are also identified by a specific number. One way for the base to relay the information about the correctness of the packet is to identify all the frames and sub-frames that have been received correctly. Another way is to identify the frames and sub-frames that have been received in error. The way the base station could identify the correctness of a frame or subframe is by checking its cyclic residue code (CRC) field. Other more robust mechanisms for acknowledgment may be used. For example, a negative acknowledgment may be part of the common packet channel. The base station could send a negative acknowledgment (ACK), as part of the L1 ACK, in order to force the remote station from transmitting the message part.

### CD Operation

There are many remote stations that might try to access the base station at the same time. There are a number of different preamble signals which a remote station can use for reaching the base station. Each remote station chooses at random one of the preamble signals to use for accessing the base station. The base station transmits a broadcast common synchronization channel. This broadcast common synchronization channel includes a frame timing signal. The remote stations extract the frame timing transmitted by the base station by receiving the broadcast common synchronization channel. The frame timing is used by the remote stations to derive a timing schedule by dividing the frame duration in a number of access slots. The remote stations are allowed to transmit their preambles only at the beginning of each access slot. The actual transmit times for different remote stations could be slightly different due to their different propagation delays. This defines an access protocol commonly known as the slotted ALOHA access protocol. Each remote station repeatedly transmits its preamble signal until the base station detects the preamble, acknowledges that the preamble is received, and the acknowledgment is correctly received by the remote station. There could be more than one remote station transmitting the same preamble signal in the same access slot. The base station cannot recognize if two or more remote stations were transmitting the same preamble in the same access slot. When the base station detects the transmission of a preamble signal, it transmits back an acknowledgment message. There is one acknowledgment message corresponding to each possible preamble signal. Therefore, the are as many acknowledgment messages as there are preamble signals. Every transmitting remote station which receives an acknowledgment message corresponding to its transmitting preamble signal, will start transmitting its message. For each preamble signal, there is a corresponding spreading code used by the base station to transmit the message. The message transmission always starts at the beginning of an access slot. Since there could be a number of remote stations using the same preamble signal in the same access slot, they start transmitting their message at the same time using the same spreading code. In that case, the transmissions of the remote stations likely interferes with each other and thus is not received correctly.

Each remote station includes a collision detection (CD) field in the beginning of the transmitted message. The CD field is chosen at random by each remote station and independently from each other Remote Station. There is a predefined limited number of CD fields. Two remote stations transmitting their message at the same time most likely chose a different CD field. When the base station receives the CD field, the base station reflects back, transmits back, the CD field to the remote station. The remote station reads the reflected CD field by the base station. If the reflected CD field matched the CD field the remote station transmitted, the remote station assumes that the remote station is being received correctly by the base station and continue transmitting the rest of the message, or data. If the reflected CD field from the base station did not match the one transmitted by the remote station, then the remote station assumes that there has been a collision and stops transmitting the remaining message or data.

### Pro-Data Power Control

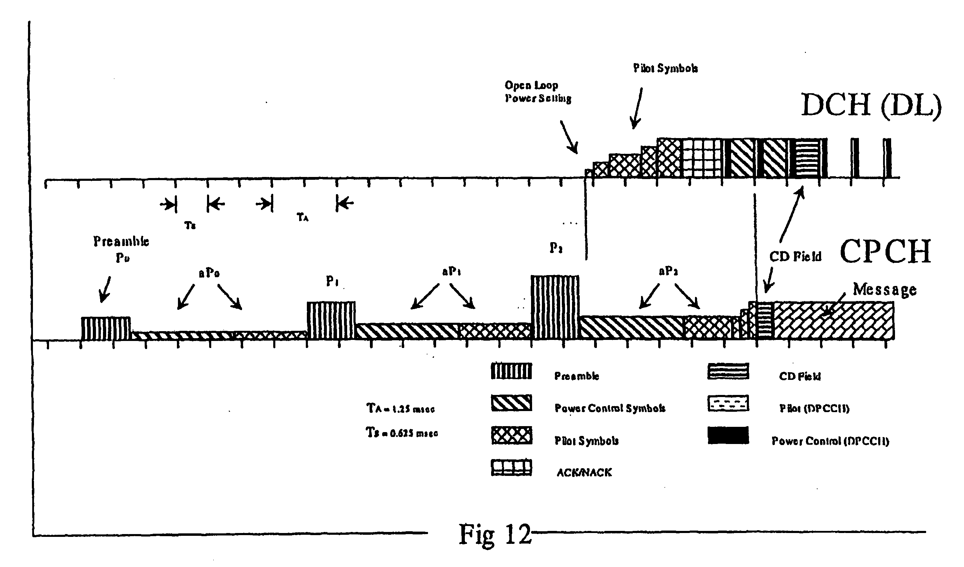

FIG. 12 shows an alternative embodiment for the RS-access-burst signal transmitted from the remote station to the base station. The base station transmits a frame-timing signal using the broadcast common-synchronization channel. The remote station synchronizes to the broadcast common-synchronization channel and retrieves frame-timing information from the frame-timing signal. The frame-timing information includes the timing for when the remote station can transmit an access-burst signal. Using the frame-timing information, the remote station sets up a transmission timing schedule. For this embodiment, the remote station divides the frame time duration into a number of access-time slots. The duration of a time slot can be half the duration of an access slot. The remote station starts transmitting an access-burst signal at the beginning of an access-time slot. The frame-time reference of the remote station is not necessarily the same as the frame-time reference of the base station, due to propagation delays.

The access-burst signal of FIG. 12 comprises a plurality of RS-preamble signals, RS-power-control signals, and RS-pilot signals, respectively, transmitted in time, at increasing power levels. The power from RS-preamble signal to RS-preamble signal increases according to the power values P₀, P₁, P₂, .... The power values increase according to their index, that is, P₀ < P₁ < P₂, ... The combined plurality of RS-preamble signals, RS-power-control signals, and RS-pilot signals, makeup part of, or all of, the access-burst signal. The power level of the RS-power-control signal and the RS-pilot signal may be at a proportion of the power level of the RS-preamble signal.

The plurality of RS-preamble signals, RS-power-control signals, and RS-pilot signals is followed in time by a data. Thus, the access-burst signal also may include a data part. Alternatively, the access-burst signal may include the plurality of RS-preamble signals, RS-power-control signals, and RS-pilot signals, and the data are considered concatenated to the access-burst signal. The data may include message information, or other information such as signaling, etc. The data preferably are concatenated to, or are part of, the access-burst signal, but may be sent separately from the access-burst signal.

As shown in FIG. 12, an RS-power-control signal is transmitted first in time during the time interval between the RS preamble signals. The RS-preamble signal is a time portion of the access-burst signal. An RS-pilot signal is transmitted second in time during the time interval between RS-preamble signal to RS-preamble signal.

The RS-power-control signal is for power control of a dedicated downlink channel. The base station transmits the dedicated downlink in response to detecting the RS-preamble signal transmitted by the remote station. The RS-pilot signal allows the base station to measure the received power from the remote station, and consequently power control the remote station using power control information transmitted from the base station to the remote station.

Within an access-burst signal, the remote station continuously transmits an RS-preamble signal, followed by a RS-power-control signal, and followed by a RS-pilot signal. The base station receiver searches for the transmission of the RS-preamble signals. At a predetermined time instant after the base station detects an RS-preamble signal, the base station starts transmitting a BS-preamble signal as shown in FIG. 12. The remote station, after every transmission of a RS-preamble signal, tunes its receiver to receive the BS-preamble-pilot signal. The RS-pilot signal transmission timing offset is previously known to the remote station. The remote station starts receiving the BS-preamble-pilot signal at the known time instant. The spreading code used by the base station to transmit the BS-preamble-pilot signal is known to the remote station since the BS-preamble-pilot signal is tied to the type of RS-preamble signal which the remote station transmitted.

The remote station starts the reception process of the BS-preamble-pilot signal whether the BS-preamble-pilot signal is transmitted or is not transmitted. The remote station does not make an effort to determine if the BS-preamble-pilot signal were transmitted or not. The reception of the BS-preamble-pilot signal enables the remote station to measure the signal quality of the transmitted BS-preamble-pilot signal. This quality measure could be, for example, the received signal-to-noise-ratio (SNR), or probability of error, due to the reception of the BS-preamble-pilot signal by the remote station.

The initial power level of the BS-preamble-pilot signal is determined by the base station prior to transmission. As a result of the BS-preamble-pilot signal reception, the remote station determines if the SNR of the received BS-preamble-pilot signal were above or below a previously defined SNR level of the remote station (RS-SNR-level). If the BS-preamble-pilot signal were not transmitted by the base station, then the remote station demodulator, or processor, likely decides that the transmitted BS-preamble-pilot signal is received at an SNR well below the previously defined RS-SNR-level.

While measuring the received SNR of the BS-preamble-pilot signal, the remote station transmits power control commands using the RS-power-control signal. If the SNR of the received BS-preamble-pilot signal, measured by the remote station, fell below the previously defined RS-SNR-level, then the remote station sends a "increase" signal, e.g., a 1-bit, to the base station, commanding the base station to increase the transmitting power level of the BS-preamble-pilot signal. In the case the SNR of the BS-preamble-pilot signal, measured by the remote station, fell above the previously defined RS-SNR-level, the remote station sends a "reduce" signal, e.g., a 0-bit, to the base station commanding the base station to reduce the transmission power level of the BS-preamble-pilot signal. This process continues for the time duration of the RS-power-control signal. If the base station had detected the RS-preamble signal, then the power of transmitted BS-preamble-pilot signal is adjusted by the remote station to bring the measured SNR of the received BS-preamble-pilot close to the predefined RS-SNR-level.

After a predetermined time interval from detecting of the RS-preamble signal, the base station transmit an acknowledgment message. The time of transmission as well as the code structure of the acknowledgment message is known to the remote station. The structure of the acknowledgment message is tied to the code structure of the RS-preamble transmitted by the remote station. The remote station sets.its receiver to detect the acknowledgment message. At the same time, the remote station starts transmitting the RS-pilot signal, which the base station is able to receive since the base station knows the transmission time as well as code structure of the RS-pilot signal. If the remote station did not detect an acknowledgment transmitted by the base station, then the remote station assumes that the remote station's previously transmitted RS-preamble signal is not detected by the base station. In such a case, the remote station will set up for transmitting the next RS-preamble signal transmission. If the remote station detected the transmission of the acknowledgment message, then the remote station decodes the message.

From the decoded message, the remote station decides if the decoded acknowledgment message is a positive or negative acknowledgment. If the acknowledgment message were determined to be negative, then the remote station stops all transmissions. The remote station starts again at a later time by going to a predetermined back-off process. If the acknowledgment message were determined to be positive, then the remote station continues transmitting the RS-pilot signal.

The base station receives the RS-pilot signal and determines if the received SNR of the received RS-pilot signal were above or below a predetermined BS-SNR-level. If the measured received SNR of the RS-pilot signal were below the predetermined BS-SNR-level, then the base station commands the remote station to increase the transmitting power of the remote station, by sending an "increase" signal, such as a 1-bit command, to the remote station. If the measured received SNR of the RS-pilot signal were above the predetermined BS-SNR-level, then the base station commands the remote station to decrease its transmitting power by sending a "reduce" signal, such as a 0-bit command, to the remote station. These commands could be transmitted via a set of DPCCH-pilot symbols followed by a few power DPCCH-power-control symbols.

During the first two time slots, additional power control commands are transmitted between consecutive DPCCH-power-control symbols and DPCCH-pilot symbols as shown in FIG. 12. The transmission of these power control commands brings the power level of the transmitted RS-pilot signal close to the predefined BS-SNR-level. As a precaution, the total amount of power change for both the remote station and the base station might be limited to a predetermined maximum value. This value could be fixed, or broadcast by the base station. Since the remote station received a positive acknowledgment from the base station and the remote station completed the transmission of the RS-pilot signal, the remote station transmits a RS-collision-detection field followed by a message carrying data information. The RS-collision-detection field is received by the base station and transmitted back to the remote station at the following transmitted time slot as a BS-collision-detection field. If the BS-collision-detection field, received by the remote station, matched the RS-collision detection field transmitted by the remote station, then the remote station continues transmitting the remaining message.

The base station continues to power control the remote station by continuously transmitting DPDCH-pilot signals and DPDCH-power control signals. If the BS-collision-detection field did not match the transmitted RS-collision-detection field, then the remote station decides that its transmission collided with the transmission by another remote station trying to access the base station at the same time using the same RS-access-burst signal code structure and stop any transmission until a later time.

### CPCH with a Ping-Ponging Preamble

Normally, the remote station, before going into the transmitting mode, searches for a base stations in its immediate neighborhood, and chooses to transmit to the strongest received base station. The choice to which base station to transmit, is a remote station transmission decision. The decision is based on the power received, or equivalently probability of error, by the remote station from the base stations. Most of the time, the remote station transmission is received by appreciable power from a single base station only. In that case, the remote station needs only to communicate to that base station.

An estimate of the power at which a base station receives a remote station, can be generated from the amount of power the remote station receives the base station. This normally is called an open loop power estimate. The open loop power estimate allows a remote station to determine the power received at different base stations by the amount of power the remote station receives those base stations. Given that the uplink and downlink frequencies are different, this is not a very accurate estimate. However, the open loop power estimate can be used to determine if one or more base stations were candidates for communication. This can serve especially well when the remote station is located at the outskirt of a cell. In that case, the remote station's transmission could be received strongly from more than a single base station. A more important measure is the power by which the remote station is being received by the base stations. This is because, when operating the common packet channel, most of the information transmission is on the uplink. In this embodiment, an alternative to the previous CPCH concept, which allows the remote station to most of the time, select the best receiving base station. The alternative provides considerable capacity advantage to remote stations operating at the outskirts of a cell. By being connected to the base station, the remote stations are being received the strongest, the overall system capacity is maximized.

When the remote station chooses a particular base station with which to communicate, and establishes communication with the chosen base station, then, the remote station is linked to that base station.

One way the remote station (RS) can choose which base station it should link to, is to transmit a RS-preamble to more than one base station, and then choose either the base station that acknowledges the reception, or to the base station that received the strongest, if more that one base station acknowledged the reception at about the same time.

Normally, there are different RS-preambles for each base station. Also, given that the base stations are not synchronized, transmissions to different base stations might need to occur at different times. Therefore, the remote station needs to transmit alternatively to a number of base stations and also expect their acknowledgments at different times. Clearly, the remote station transmits to a single base station and always the same RS-preamble if the remote station deemed that it were in the receiving range of a single only base station.

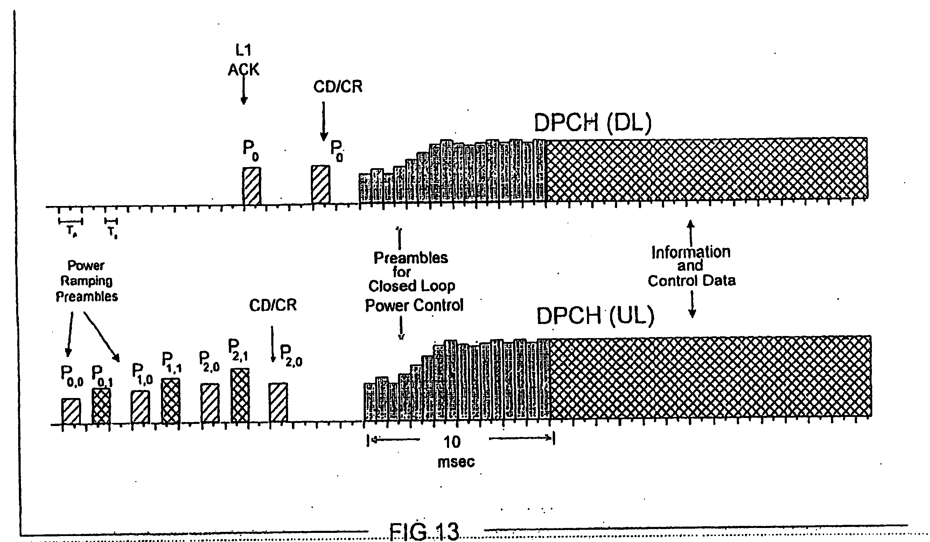

Assume that the remote station is in the receiving range of two base stations. As seen from FIG. 13, the remote station transmits sequentially two different preambles to two base stations. These are two RS-preambles. The powers of the preambles increase in time. The preamble for the first base station, base station 0 as indicated by the second subscript, is transmitted at powers P_{0,0}, P_{1,0}, P_{2,0} .. The preamble for the second base station, base station 1 as indicated by the second subscript, is transmitted at powers P_{0,1}, P_{1,1}, P_{2,1}, ... In this case, only the first base station acknowledges the reception of second RS-preamble. The remote station then undergoes through the collision detection/collision resolution (CD/CR) process, the transmission of the RS-CLPC-preamble, and the transmissions of the data information. Ways to enable preamble transmissions to more than two base stations can be derived from the above procedure. From FIG. 13, the reception of the last RS-Preamble at the first base station is assumed to be received stronger than the last RS-preamble at the second base station. Therefore, the base station that possessed the better uplink channel is chosen. A remote station could also have the choice of responding to the first base station that acknowledges a preamble reception. This could be for the case when the information transmission delay needs to be minimized.

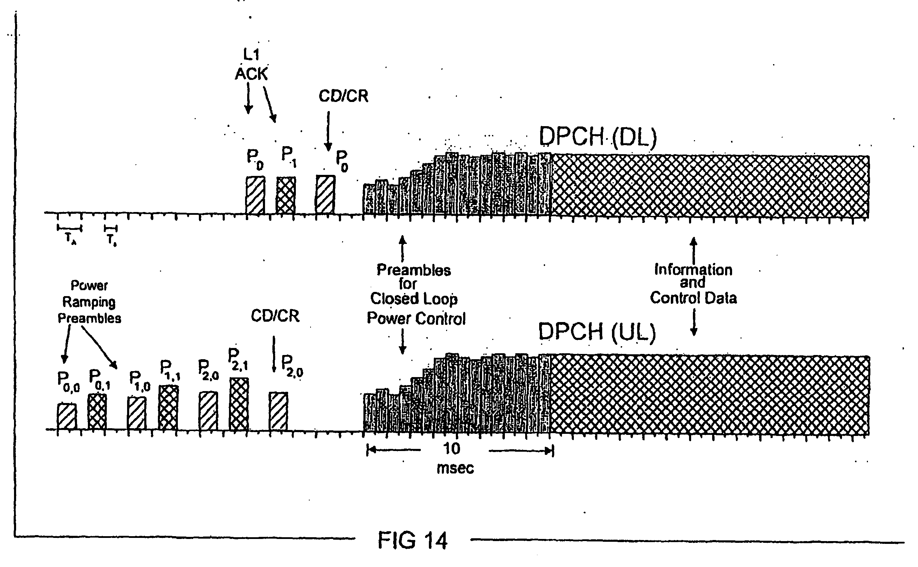

In FIG. 14, both the first base station and the second base station acknowledged their corresponding RS-preamble reception. The remote station, however, underwent the CD/CR process for the first base station without waiting for the reception of the second base station acknowledgment. The remaining process is the same as before with the remote station being in link with first base station.

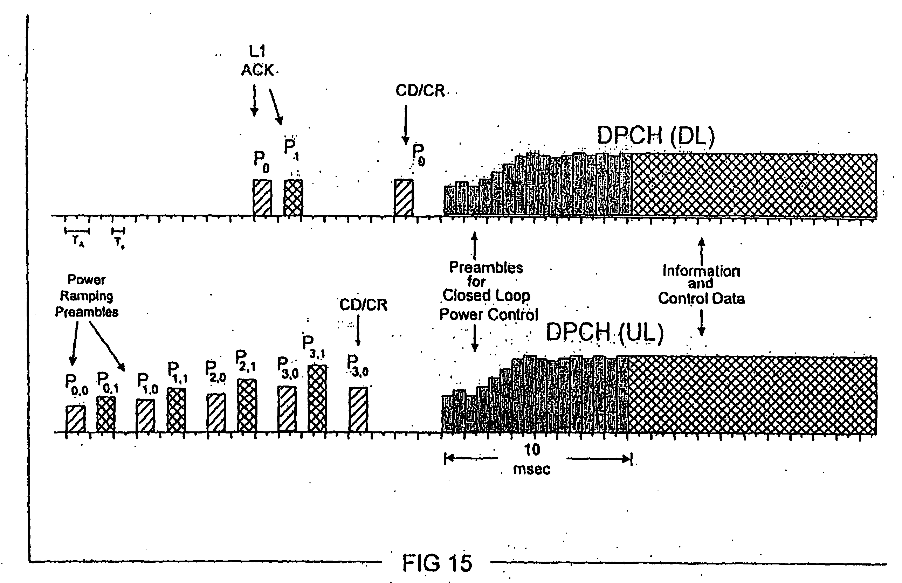

In FIG. 15, the remote station awaits for the possible reception of both acknowledgments before deciding which base station to transmit the CD/CR preamble signal. This allows the remote station to select the base station that is being received the strongest. This does not necessarily guarantee that the base station selected is the one with the better uplink channel. Statistically, however, the base station being received by the remote station the strongest, is the most likely one to have the better uplink channel.

### CPCH Operation Using a Common Preamble

When the remote station is in a region at about the same distance from two or more base stations, then the power received at the remote station from the base stations, is not a clear indication of which base station is best receiving the remote station. A mechanism is needed so that the receiving base station is being used for communication most of the time.

In certain cases, the remote station could transmit a RS-preamble that is common to two or more base stations. The two or more base stations form a base-station-group. The common RS-preamble is being received by all base stations in the base-station-group. The base stations which form the base-station-group is decided by the remote station, using the power readings, or equivalently probability of error readings, from base station receptions within the receiving-range (RR) of the remote station.

Before the burst transmission, the remote station selects the group of base stations that it deems as potential base stations with which to set up a link. The information on which base stations belong to in the base-station-group for each remote station is relayed before hand by a previous communication between the remote station and a base station in the immediate vicinity of the remote station. This base station should also be a member of the selected base-station-group. At the onset of the transmission from the remote station, all base stations in the base-station-group are tuned to receiving this common RS-preamble. At some point, one or more base stations from the base-station-group will detect the RS-preamble and send over their downlink channel a L1 Acknowledgment (L1 ACK).

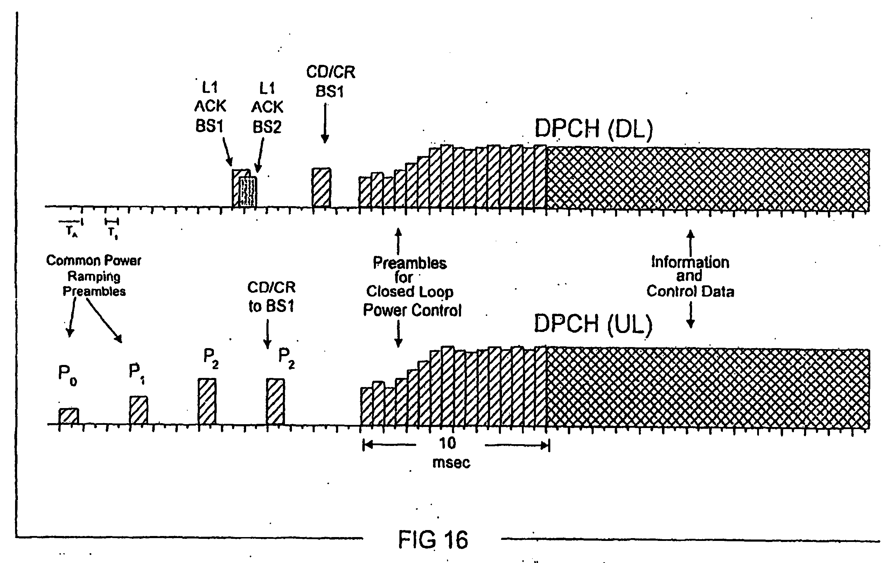

As shown in FIG. 16, two base stations from the base-station-group acknowledged the common RS-preamble transmission. The remote station, knowing the timing of the L1 acknowledgment for all base stations in the base-station-group, can determine if and how many base stations acknowledged. Measuring the relative powers of the L1 acknowledgment signals, the remote station then sends a collision detection/collision resolution-preamble (CD/CR-preamble) to a single base station. That is, the remote station sends a CD/CR-preamble which can be detected by the selected base station in the base-station-group. The base station that receives the CD/CR-preamble responds back with the same CD/CR-preamble. The different CD/CR-preamble code structures are known to all base stations in the base-station-group through some negotiation carried out beforehand between the remote station and the base stations in the base-station-group. The CD/CR-preamble serves the purpose of detecting the possibility of more than a single common RS-preamble transmission from different remote stations.

With the remote station picking at random a CD/CR-preamble from a set a possible CD/CD-preambles, unless the same CD/CR-preambles is reflected back from the selected base station, the remote station refrains from, at least temporarily, completing its intended transmission. At a predetermined time instant, both the remote station and the base station selected start transmitting closed loop power control preambles (CLPC-preambles). The base station sends a BS-CLPC-preamble and the remote station a RS-CLPC-preamble. These preambles serve for closed loop power controlling both the remote station and the base station before the transmission of the actual information and control data.

It will be apparent to those skilled in the art that various modifications can be made to the common packet channel of the instant invention without departing from the scope of the invention, and it is intended that the present invention cover modifications and variations of the common packet channel provided they come within the scope of the appended claims.

## Claims

1. A method of transferring data for one of a plurality of base stations BS (31-33) of a CDMA wireless telecommunication network, the base station comprising a BS-spread-spectrum transmitter and a BS-spread-spectrum receiver, the method comprising the steps of:
- transmitting a frame-timing signal from said BS-spread-spectrum transmitter over a broadcast common-synchronization channel having a common chip-sequence signal;
- receiving from a remote station (35) at least one segment comprising a preamble with sufficient power level of an access-burst signal at said BS spread-spectrum receiver at a detected-power level, the access-burst comprising a plurality of segments, each comprising a particular preamble from a set of predefined preambles and a pilot signal, in such a way that the segments are transmitted at a step wise sequentially increasing power levels, the access burst signal starting at the beginning of an access slot, as defined by a frame timing derived from the frame-timing signal;
- transmitting an acknowledgment from said BS-spread-spectrum transmitter to the remote station, in response to the receipt of the at least one segment of the access-burst signal and corresponding to the specific preamble structure received by the base station;
- receiving from the remote station a selected one of a plurality of collision-detection CD codes by the BS-spread-spectrum receiver; and
- transmitting to the remote station a BS-CD code matching the received CD code from said BS-spread-spectrum transmitter; and
- receiving from the remote station a spread-spectrum signal comprising any of data and power control information at said BS-spread-spectrum receiver.

2. Method as in claim 1, wherein the pilot signal is eliminated by being set to a zero power level.

3. Method as in claim 1 or 2, wherein concurrent with the reception of the spread-spectrum signal from the remote station, any of data and power control information is transmitted from the BS-spread-spectrum transmitter.

4. Method as in claim 3, wherein transmitting any of data and power control information from the BS-spread-spectrum transmitter is at power levels based on power control information received from the remote station.

5. Method as in one of claims 3 or 4, wherein transmitting any of data and power control information from the BS-spread-spectrum transmitter begins with transmitting first power control information, followed in time by any of data and power control information.

6. A code-division-multiple-access CDMA wireless base station BS (31-33) comprising a BS-spread-spectrum transmitter and a BS-spread-spectrum receiver and a controller, **characterized in that** in operation, the CDMA base station is adapted to perform the following steps:
- transmitting a frame-timing signal from said BS-spread-spectrum transmitter over a broadcast common-synchronization channel having a common chip-sequence signal;
- receiving from a remote station (35) at least one segment comprising a preamble with sufficient power level of an access-burst signal at said BS spread-spectrum receiver at a detected-power level, the access-burst comprising a plurality of segments, each comprising a particular preamble from a set of predefined preambles and a pilot signal, in such a way that the segments are transmitted at stepwise sequentially increasing power levels, the access burst signal starting at the beginning of an access slot, as defined by a frame timing derived from the frame-timing signal;
- transmitting an acknowledgment from said BS-spread-spectrum transmitter to the remote station, in response to the receipt of the at least one segment of the access-burst signal and corresponding to the specific preamble; structure received by the base station
- receiving from the remote station a selected one of a plurality of collision-detection CD codes by the BS-spread-spectrum receiver; and
- transmitting to the remote station a BS-CD code matching the received CD code from said BS-spread-spectrum transmitter; and
- receiving from the remote station a spread-spectrum signal comprising any of data and power control information at said BS-spread-spectrum receiver.

7. The base station as in claim 6, wherein the pilot signal is eliminated by being set to a zero power level.

8. The base station as in claim 6 or 7, wherein the BS-spread-spectrum transmitter is adapted to transmit any of data and power control information concurrent with the reception of data transmission from the remote station (35).

9. The base station as in claim 8, wherein the BS-spread-spectrum transmitter is adapted for transmitting any of data and power control information at power levels based on power control information received from the remote station.

10. The base station as in one of the claims 8 or 9, wherein the BS-spread-spectrum transmitter is adapted for transmitting any of data and power control information that begins with transmitting first power control information, followed in time by any of data and power control information.

11. Processing device of a code-division-multiple-access (CDMA) wireless base station BS (31-33) comprising :
- a preamble processor (316), for detecting a preamble in received spread-spectrum signals;
- a data and control processor (318), for detecting and processing data and control information contained in the received spread-spectrum signals;
- an encoder (22), for encoding data;
- an interleaver (323), coupled to the encoder, for interleaving encoded data;
- a packet formatter (324), coupled to the interleave, for formatting any of the interleaved encoded data, signaling, acknowledgment signal, collision detection signal, pilot signal and transmission power control (TPC) signal into a packet; and
- a controller (319) coupled to the preamble processor, the data and control processor and to the packet formatter for controlling the preamble processor, the data and control processor and the packet formatter, such that in operation the processing device is adapted for performing the following steps:
- detecting a coded preamble signal of an access burst that is embedded in a first spread-spectrum signal received at an adequate power level, the access burst comprising a plurality of segments each comprising a particular preamble from a set of predefined preambles in such a way that the segments are transmitted at stepwise sequentially increasing power levels,
- upon detection of the coded preamble signal at the adequate power level, generating a packet comprising an acknowledgement signal and outputting the packet comprising the acknowledgement signal to a modulator of the wireless base station,
- detecting a collision detection code in a second spread-spectrum signal received at the wireless base station; and
- generating a packet comprising a base station collision detection code matching the received collision detection code and outputting the packet comprising the base station collision detection code to the modulator of the wireless base station; and
- generating a packet comprising any of data and control information and outputting the packet to the modulator of the wireless base station.

12. The processing device as set forth in claim 11, further comprising a programmable-matched filter (315) for despreading the received spread-spectrum signals.

13. The processing device as set forth in claim 11, further comprising a correlator for despreading the received spread-spectrum signals.

14. The processing device as set forth in claim 11, further comprising:
- an analog-to-digital converter (314) for converting the received spread-spectrum signals from an antenna to a digital signal; and
- means responsive to the digital signal from the analog-to-digital converter for despreading the received spread-spectrum signals.

15. The processing device as set forth in claim 11 or 14, further comprising:
- means (326) for processing the packets for spreading thereof; and
- a digital-to-analog converter (328), coupled to the means for processing, for producing a modulated spread spectrum signal for transmission from the base station, wherein the means for processing and the digital-to-analog converter form at least a portion of the modulator of the wireless base station.

16. The processing device as set forth in claim 11, further comprising a variable gain device (325), coupled to the packet formatter, for adjusting the level of the packets from the packet formatter before application thereof to the modulator of the wireless base station.

## Patentansprüche

1. Verfahren zum Übertragen von Daten für eine von mehreren Basisstationen BS (31-33) eines drahtlosen CDMA-Telekommunikationsnetzes, wobei die Basisstation einen BS-Streuspektrumsender und einen BS-Streuspektrumempfänger aufweist, wobei das Verfahren folgende Schritte umfasst:
- Senden eines Rahmentaktungssignals vom BS-Streuspektrumsender über einen Rundfunkkanal mit gemeinsamer Synchronisation mit einem gemeinsamen Chipsequenzsignal;
- wenigstens ein Segment eines ein Signalanfangsetikett mit ausreichendem Leistungspegel umfassenden Zugriffsstoßsignals von einer Remote-Station (35) wird am BS-Streuspektrumempfänger bei einem erfassten Leistungspegel empfangen, wobei das Zugriffsstoßsignal mehrere Segmente umfasst, die jeweils ein bestimmtes Signalanfangsetikett aus einer Menge von festgelegten Signalanfangsetiketten und ein Pilotsignal umfassen, derart, dass die Segmente bei schrittweise sequentiell ansteigenden Leistungspegeln gesendet werden, wobei das Zugriffsstoßsignal am Beginn eines Zugriffsschlitzes einsetzt, wie durch eine aus dem Rahmentaktungssignal abgeleitete Rahmentaktung definiert;
- Senden einer Empfangsbetätigung vom BS-Streuspektrumsender an die Remote-Station im Ansprechen auf den Empfang des wenigstens einen Segments des Zugriffsstoßsignals und entsprechend der spezifischen, durch die Basisstation empfangenen Signalanfangsetikettstruktur;
- von der Remote-Station wird ein ausgewählter Kollisionserfassungscode (CD-Code) aus mehreren derartiger Codes durch den BS-Streuspektrumempfänger empfangen;
- vom BS-Streuspektrumsender wird an die Remote-Station ein BS-CD-Code gesendet, der mit dem empfangenen CD-Code übereinstimmt; und
- Empfangen eines Streuspektrumsignals von der Remote-Station am BS-Streuspektrumempfänger, wobei das Streuspektrumsignal beliebige Daten- und Leistungssteuerungsinformationen umfasst.

2. Verfahren nach Anspruch 1, wobei das Pilotsignal eliminiert wird, indem es auf einen Nullleistungspegel gesetzt wird.

3. Verfahren nach Anspruch 1 oder 2, wobei gleichzeitig mit dem Empfang des Streuspektrumsignals von der Remote-Station beliebiger Daten- und Leistungssteuerungsinformationen vom BS-Streuspektrumsender gesendet werden.

4. Verfahren nach Anspruch 3, wobei das Senden beliebiger Daten- und Leistungssteuerungsinformationen vom BS-Streuspektrumsender bei Leistungspegeln stattfindet, die auf von der Remote-Station empfangenen Leistungssteuerungsinformationen beruhen.

5. Verfahren nach Anspruch 3 oder 4, wobei das Senden beliebiger Daten- und Leistungssteuerungsinformationen vom BS-Streuspektrumsender mit dem Senden einer ersten Leistungssteuerungsinformation beginnt, zeitlich gefolgt von beliebigen Daten- und Leistungssteuerungsinformationen.

6. Drahtlose, mit Codemultiplex-Vielfachzugriff (CDMA) arbeitende Basisstation BS (31-33), die einen BS-Streuspektrumsender und einen BS-Streuspektrumempfänger und eine Steuerungseinheit umfasst, **dadurch gekennzeichnet, dass** im Betrieb die CDMA-Basisstation dazu ausgelegt ist, folgende Schritte auszuführen:
- Senden eines Rahmentaktungssignals vom BS-Streuspektrumsender über einen Rundfunkkanal mit gemeinsamer Synchronisation mit einem gemeinsamen Chipsequenzsignal;
- wenigstens ein Segment eines ein Signalanfangsetikett mit ausreichendem Leistungspegel umfassenden Zugriffsstoßsignals von einer Remote-Station (35) wird am BS-Streuspektrumempfänger bei einem erfassten Leistungspegel empfangen, wobei das Zugriffsstoßsignal mehrere Segmente umfasst, die jeweils ein bestimmtes Signalanfangsetikett aus einer Menge von festgelegten Signalanfangsetiketten und ein Pilotsignal umfassen, derart, dass die Segmente bei schrittweise sequentiell ansteigenden Leistungspegeln gesendet werden, wobei das Zugriffsstoßsignal am Beginn eines Zugriffsschlitzes einsetzt, wie durch eine aus dem Rahmentaktungssignal abgeleitete Rahmentaktung definiert;
- Senden einer Empfangsbetätigung vom BS-Streuspektrumsender an die Remote-Station im Ansprechen auf den Empfang des wenigstens einen Segments des Zugriffsstoßsignals und entsprechend der spezifischen, durch die Basisstation empfangenen Signalanfangsetikettstruktur; und
- Empfangen eines Streuspektrumsignals von der Remote-Station am BS-Streuspektrumempfänger, wobei das Streuspektrumsignal beliebige Daten- und Leistungssteuerungsinformationen umfasst.

7. Basisstation nach Anspruch 6, wobei das Pilotsignal eliminiert wird, indem es auf einen Nullleistungspegel gesetzt wird.

8. Basisstation nach Anspruch 6 oder 7, wobei der BS-Streuspektrumsender dazu ausgelegt ist, gleichzeitig mit dem Empfang der Datenübertragung von der Remote-Station (35) beliebige Daten- und Leistungssteuerungsinformationen zu senden.

9. Basisstation nach Anspruch 8, wobei der BS-Streuspektrumsender dazu ausgelegt ist, beliebige Daten- und Leistungssteuerungsinformationen bei Leistungspegeln zu senden, die auf von der Remote-Station empfangenen Leistungssteuerungsinformationen beruhen.

10. Basisstation nach Anspruch 8 oder 9, wobei der BS-Streuspektrumsender dazu ausgelegt ist, beliebige Daten- und Leistungssteuerungsinformationen zu senden, was mit dem Senden einer ersten Leistungssteuerungsinformation beginnt, zeitlich gefolgt von beliebigen Daten- und Leistungssteuerungsinformationen.

11. Verarbeitungseinheit einer drahtlosen, mit Codemultiplex-Vielfachzugriff (CDMA) arbeitenden Basisstation BS (31-33), Folgendes umfassend:
- einen Signaletikettprozessor (316), um ein Signalanfangsetikett in empfangenen Streuspektrumsignalen zu erfassen;
- einen Daten- und Steuerungsprozessor (318), um in den empfangenen Streuspektrumsignalen enthaltene Daten- und Steuerungsinformationen zu erfassen und zu verarbeiten;
- einen Codierer (322) zum Codieren von Daten;
- eine an den Codierer gekoppelte Verschachtelungseinheit (323), um codierte Daten zu verschachteln;
- einen an die Verschachtelungseinheit gekoppelten Paketformatierer (324), um beliebige verschachtelte codierte Daten, eine Signalisierung, das Empfangsbestätigungssignal, Kollisionserfassungssignal, Pilotsignal und ein Übertragungsleistungs-Steuerungssignal (TPC-Signal) zu einem Paket zu formatieren; und
- eine Steuerungseinheit (319), die an den Signaletikettprozessor, den Daten- und Steuerungsprozessor und den Paketformatierer zum Steuern des Signaletikettprozessors gekoppelt ist, derart, dass im Betrieb die Verarbeitungseinheit dazu ausgelegt ist, die folgenden Schritte auszuführen:
- Erfassen eines codierten Signalanfangsetiketts eines Zugriffsstoßsignals, das in ein erstes, bei einem entsprechenden Leistungspegel empfangenes Streuspektrumsignal eingebettet ist, wobei das Zugriffsstoßsignal mehrere Segmente umfasst, die jeweils ein bestimmtes Signalanfangsetikett aus einer Menge von festgelegten Signalanfangsetiketten umfassen, derart, dass die Segmente bei schrittweise sequentiell ansteigenden Leistungspegeln gesendet werden,
- Erzeugen eines ein Empfangsbestätigungssignal umfassendes Paket bei Erfassung des codierten Signalanfangsetikettsignals bei dem entsprechenden Leistungspegel, und Ausgeben des das Empfangsbestätigungssignal umfassenden Pakets an einen Modulator der drahtlosen Basisstation,
- Erfassen eines Kollisionserfassungscodes in einem zweiten, an der drahtlosen Basisstation empfangenen Streuspektrumsignal;
- Erzeugen eines Pakets, das einen Basisstation-Kollisionserfassungscode umfasst, der mit dem empfangenen Kollisionserfassungscode übereinstimmt, und Ausgeben des den Basisstation-Kollisionserfassungscode umfassenden Pakets an den Modulator der drahtlosen Basisstation, und
- Erzeugen eines Pakets, das beliebige Daten- und Steuerungsinformationen umfasst, und Ausgeben des Pakets an den Modulator der drahtlosen Basisstation.

12. Verarbeitungseinheit nach Anspruch 11, darüber hinaus ein programmierbares Anpassungsfilter (315) umfassend, um die empfangenen Streuspektrumsignale zu bündeln.

13. Verarbeitungseinheit nach Anspruch 11, darüber hinaus einen Korrelator umfassend, um die empfangenen Streuspektrumsignale zu bündeln.

14. Verarbeitungseinheit nach Anspruch 11, darüber hinaus umfassend:
- einen A/D-Wandler (314) zum Umwandeln der von einer Antenne empfangenen Streuspektrumsignale in ein digitales Signal; und
- eine Einrichtung, die auf das digitale Signal vom A/D-Wandler anspricht, um die empfangenen Streuspektrumsignale zu bündeln.

15. Verarbeitungseinheit nach Anspruch 11 oder 14, darüber hinaus umfassend:
- eine Einrichtung (326) zur Verarbeitung der Pakete zu deren Verbreitung; und
- einen D/A-Wandler (328), der an die Einrichtung zur Verarbeitung gekoppelt ist, um für die Übertragung von der Basisstation ein moduliertes Streuspektrumsignal zu erzeugen, wobei die Einrichtung zur Verarbeitung und der D/A-Wandler wenigstens einen Teil des Modulators der drahtlosen Basisstation bilden.

16. Verarbeitungseinheit nach Anspruch 11, darüber hinaus einen Baustein (325) mit variabler Verstärkung umfassend, der an den Paketformatierer gekoppelt ist, um die Ebene der Pakete vom Paketformatierer einzustellen, bevor sie auf den Modulator der drahtlosen Basisstation angewendet werden.

## Revendications

1. Une méthode de transfert de données pour une station parmi une pluralité de stations de base BS (31-33) dans un réseau de télécommunications sans fil CMDA, la station de base comportant un émetteur à spectre étalé BS et un récepteur à spectre étalé BS, la méthode comportant les étapes de:
- émission d'une signal de rythme de trame par ledit émetteur à spectre étalé BS sur un canal de diffusion à synchronisation commune ayant un signal commun de séquence de "chips";
- réception par une station éloignée (35), d'au moins un segment comportant un préambule avec un niveau suffisant de puissance dans un signal d'accès en rafale audit récepteur à spectre étalé BS à un niveau de puissance détectée, l'accès en rafale comportant une pluralité de segments, chacun comportant un préambule particulier parmi une série de préambules prédéfinis et un signal pilote, de telle sorte que les segments sont émis à des niveaux de puissance augmentant en paliers séquentiels, le signal d'accès en rafale commençant au début d'un intervalle d'accès, tel que défini par le rythme de trame dérivé du signal de rythme de trame;
- émission d'un accusé de réception par ledit émetteur à spectre étalé BS vers la station éloignée, en réponse à l'acquit du au moins segment du signal d'accès en rafale et correspondance à la structure de préambule spécifique reçu par la station de base;
- réception de la station éloignée d'un code sélectionné parmi une pluralité de codes de détection de collision CD par le récepteur à spectre étalé BS;
- émission vers la station éloignée d'un code BS-CD s'appariant au code CD reçu par ledit émetteur à spectre étalé BS; et
- réception de la station éloignée d'un signal à spectre étalé comportant quelconque information de contrôle de puissance ou données audit récepteur à spectre étalé BS.

2. Une méthode telle que dans la revendication 1, dans laquelle le signal pilote est éliminé en étant réglé à un niveau de puissance zéro.

3. Une méthode telle que dans la revendication 1 ou 2, dans laquelle en simultané avec la réception du signal à spectre étalé par la station éloignée, quelconque information de contrôle de puissance ou données est émise par l'émetteur à spectre étalé BS.

4. Une méthode telle que dans la revendication 3, dans laquelle l'émission de quelconque information de contrôle de puissance ou données par l'émetteur à spectre étalé BS se fait à des niveaux de puissance basés sur l'information de contrôle de puissance reçue par la station éloignée.

5. Une méthode telle que dans l'une des revendications 3 ou 4, dans laquelle l'émission de quelconque information de contrôle de puissance ou données par l'émetteur à spectre étalé BS commence avec l'émission d'information première de contrôle de puissance, suivie ensuite par quelconque information de contrôle de puissance ou données.

6. Une station de base sans fil BS (31-33) à accès multiple par répartition en code CDMA, comportant un émetteur à spectre étalé BS, un récepteur à spectre étalé BS et un contrôleur, **caractérisée en ce qu'**en activité, la station de base CDMA est adaptée pour effectuer les étapes suivantes:
- émission d'une signal de rythme de trame par ledit émetteur à spectre étalé BS sur un canal de diffusion à synchronisation commune ayant un signal commun de séquence de "chips";
- réception par une station éloignée (35), d'au moins un segment comportant un préambule avec un niveau suffisant de puissance dans un signal d'accès en rafale audit récepteur à spectre étalé BS à un niveau de puissance détectée, l'accès en rafale comportant une pluralité de segments, chacun comportant un préambule particulier parmi une série de préambules prédéfinis et un signal pilote, de telle sorte que les segments sont émis à des niveaux de puissance augmentant en paliers séquentiels, le signal d'accès en rafale commençant au début d'un intervalle d'accès, tel que défini par le rythme de trame dérivé du signal de rythme de trame;
- émission d'un accusé de réception par ledit émetteur à spectre étalé BS vers la station éloignée, en réponse à l'acquit du au moins segment_du signal d'accès en rafale et correspondance à la structure de préambule spécifique reçu par la station de base;
- réception de la station éloignée d'un code sélectionné parmi une pluralité de codes de détection de collision CD par le récepteur à spectre étalé BS;
- émission vers la station éloignée d'un code BS-CD s'appariant au code CD reçu par ledit émetteur à spectre étalé BS; et
- réception de la station éloignée d'un signal à spectre étalé comportant quelconque information de contrôle de puissance ou données audit récepteur à spectre étalé BS.

7. La station de base telle que dans la revendication 6, dans laquelle le signal pilote est éliminé en étant réglé à un niveau de puissance zéro.

8. La station de base telle que dans la revendication 6 ou 7, dans laquelle l'émetteur à spectre étalé BS est adapté pour émettre quelconque information de contrôle de puissance ou données en simultané avec la réception de transmission de données par la station éloignée (35).

9. La station de base telle que dans la revendication 8, dans laquelle l'émetteur à spectre étalé BS est adapté pour l'émission de quelconque information de contrôle de puissance ou données à des niveaux de puissance basés sur l'information de contrôle de puissance reçue par la station éloignée.

10. La station de base telle que dans l'une des revendications 8 ou 9, dans laquelle l'émetteur à spectre étalé BS est adapté pour l'émission de quelconque information de contrôle de puissance ou données qui commence avec l'émission d'information première de contrôle de puissance, suivie ensuite par quelconque information de contrôle de puissance ou données.

11. Un dispositif de traitement d'une station de base sans fil BS (31-33) à accès multiple par répartition en code CDMA, comportant:
- un processeur de préambules (316), pour la détection d'un préambule dans les signaux à spectre étalé reçus;
- un processeur de contrôle et données (318), pour la détection et traitement d'information de contrôle et données contenue dans les signaux à spectre étalé reçus;
- un encodeur (322), pour le codage de données;
- un interlaceur (323), couplé à l'encodeur, pour l'entrelacement de données encodées;
- un formateur de paquets (324), couplé à l'interlaceur, pour le formatage de quelconque donnée encodée entrelacée, signalement, signal d'accusé de réception, signal de détection de collision, signal pilote et signal de contrôle de puissance de transmission (TPC) dans un paquet; et
- un contrôleur (319) couplé au processeur de préambules, au processeur de contrôle et données et au formateur de paquets pour contrôler le processeur de préambules, le processeur de contrôle et données et le formateur de paquets, de sorte qu'en activité, le dispositif de traitement soit adapté pour effectuer les étapes suivantes:
- détection d'un signal de préambule encodé qui est intégré dans un signal à spectre étalé d'un accès en rafale reçu à un niveau adéquat de puissance, l'accès en rafale comportant une pluralité de segments, chacun comportant un préambule particulier parmi une série de préambules prédéfinis, de telle sorte que les segments sont émis à des niveaux de puissance augmentant en paliers séquentiels,
- lors de la détection du signal de préambule encodé à un niveau adéquat de puissance, génération d'un paquet comportant un signal d'accusé de réception et sortie du paquet comportant le signal d'accusé de réception vers un modulateur de la station de base sans fil,
- détection d'un code de détection de collision dans un deuxième signal à spectre étalé reçu par la station de base sans fil;
- génération d'un paquet comportant un code de détection de collision de station de base s'appariant au code de détection de collision reçu et sortie du paquet comportant le code de détection de collision de station de base vers un modulateur de la station de base sans fil; et
- génération d'un paquet comportant quelconque information de contrôle et données et sortie du paquet vers le modulateur de la station de base sans fil.

12. Le dispositif de traitement tel qu'exposé dans la revendication 11, comportant de plus un filtre programmable apparié (315) pour le désétalement des signaux à spectre étalé reçus.

13. Le dispositif de traitement tel qu'exposé dans la revendication 11, comportant de plus un corrélateur pour le désétalement des signaux à spectre étalé reçus.

14. Le dispositif de traitement tel qu'exposé dans la revendication 11, comportant de plus
- un convertisseur analogique-numérique (314) pour la conversion des signaux à spectre étalé reçus par une antenne en un signal numérique; et
- un moyen répondant au signal numérique du convertisseur analogique-numérique pour le désétalement des signaux à spectre étalé reçus.

15. Le dispositif de traitement tel qu'exposé dans la revendication 11 ou 14, comportant de plus
- un moyen (326) de traitement des paquets en vue de leur étalement; et
- un convertisseur numérique-analogique (328), couplé au moyen de traitement, pour la production d'un signal à spectre étalé modulé en vue d'une transmission à partir de la station de base, dans lequel le moyen de traitement et le convertisseur numérique-analogique forment au moins une portion du modulateur de la station de base sans fil.

16. Le dispositif de traitement tel qu'exposé dans la revendication 11, comportant de plus un dispositif à gain variable (325), couplé au formateur de paquets, pour le réglage du niveau des paquets à partir du formateur de paquets avant leur application vers le modulateur de la station de base sans fil.
